# EUROPEAN PATENT APPLICATION

(11) **EP 1 096 241 A1**
(43) Date of publication of application: **02.05.2001**
(21) Application number: 00203461.9
(22) Date of filing: 04.10.2000
(51) Int. Cl.: G01K 13/02, G01L 19/00

(54) **Integrated pressure and temperature sensor for high pressure fluid**

(30) Priority: 01.11.1999 US 432378
(71) Applicant: Delphi Technologies, Inc., Troy, MI 48007 (US)
(72) Inventor: Little, Lewis H., Peru, IN 46970 (US); Pitzer, Paul J., Kokomo, IN 46902 (US)
(74) Representative: Denton, Michael John

(57) **Abstract**

An improved and highly accurate high pressure sensor assembly (10) that integrates both pressure and temperature sensing in a single assembly. The sensor assembly (10) includes a thermistor (16), a pressure sensor (14), and a pressure port (12). The pressure port (12) has a stud portion (22) that is threaded into an opening in a pressure vessel wall (28) for contacting a pressurized fluid in the vessel, and an outboard end face (32) opposite the stud portion (22). First and second axial bores (44, 46) in said stud portion (22) accommodate the pressure and temperature sensors (14, 16). The first axial bore (44) extends completely through the stud portion (22), and the pressure sensor (16) is welded to the pressure port (12) about the first axial bore (44) to sealingly place the pressure sensor (14) in contact with the pressurized fluid. The second axial bore (46) extends only partially through said stud portion (22), and the temperature sensor (16) is disposed deep in the second axial bore (46) to place the temperature sensor (16) in virtual thermal contact with the pressurized fluid. Preferably, the temperature sensor (16) is insert molded in a plastic terminal assembly (18) that rests on the end face (32) and that includes a tube (50) that extends into the second axial bore (46) to position the temperature sensor (16) near the bottom of such bore (46).

## Description

### TECHNICAL FIELD

This invention relates to a sensor for detecting the pressure and temperature of a high pressure fluid.

### BACKGROUND OF THE INVENTION

In automotive control applications, it is frequently necessary to measure the temperature and pressure of certain high pressure fluids, such as engine crankcase oil, transmission fluid, engine coolant, or brake fluid. A proven approach to pressure sensing in such an environment involves the use of a pressure port which attaches to the pressure vessel by a threaded fitting, and a stainless steel pressure sensor welded to the pressure port. The sensor is in contact with the pressurized fluid, and the weld provides a leak-proof seal between the fluid and the sensor base. Temperature sensing, on the other hand, poses a more difficult problem because the sensing element cannot be placed in contact with the fluid without creating sealing problems with respect to the sensor lead-in wires.

Although separate sensors are generally used to measure the temperature and pressure of a fluid, it has been proposed to integrate both temperature and pressure sensors in a single package for cost savings. In the integrated approaches, the temperature sensing is typically achieved by including temperature sensitive circuitry on an integrated circuit mounted in the sensor housing. This approach avoids the sealing issue mentioned above, but the sensing accuracy is poor compared to a sensor in direct contact with the fluid.

Accordingly, what is needed is an integrated fluid temperature and pressure sensor that is both accurate and leak-proof.

### SUMMARY OF THE INVENTION

The present invention is directed to an improved and highly accurate high pressure sensor assembly that integrates both pressure and temperature sensing in a single assembly. The sensor assembly includes a thermistor, a pressure sensor, and a pressure port. The pressure port has a stud portion that is threaded into an opening in a pressure vessel wall for contacting a pressurized fluid in the vessel, and an outboard end face opposite the stud portion. First and second axial bores in said stud portion accommodate the pressure and temperature sensors. The first axial bore extends completely through the stud portion, and the pressure sensor is welded to the pressure port about the first axial bore to sealingly place the pressure sensor in contact with the pressurized fluid. The second axial bore extends only partially through said stud portion, and the temperature sensor is disposed deep in the second axial bore to place the temperature sensor in virtual thermal contact with the pressurized fluid. Preferably, the temperature sensor is insert molded in a plastic terminal assembly that rests on the end face and that includes a tube that extends into the second axial bore to position the temperature sensor near the bottom of such bore.

### BRIEF DESCRIPTION OF THE DRAWINGS

The above and other advantages of the invention will become more apparent from the following description taken in conjunction with the accompanying drawings wherein like references refer to like parts and wherein:
Figures 1A-1B are exploded views of an integrated temperature and pressure sensor according to this invention.
Figure 2 is a cross-sectional view of a fully assembled integrated temperature and pressure sensor according to this invention.

### DESCRIPTION OF THE PREFERRED EMBODIMENT

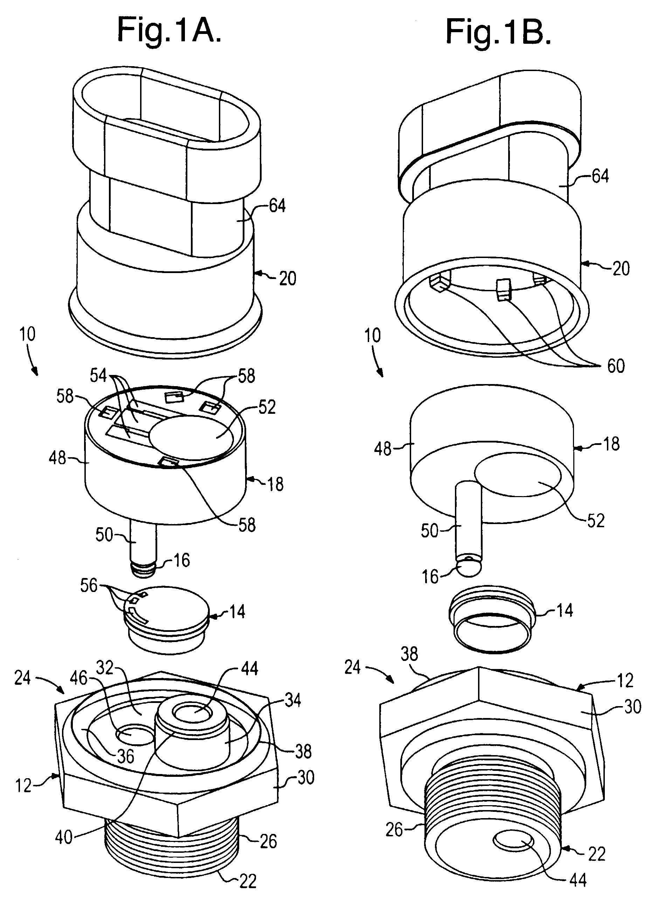

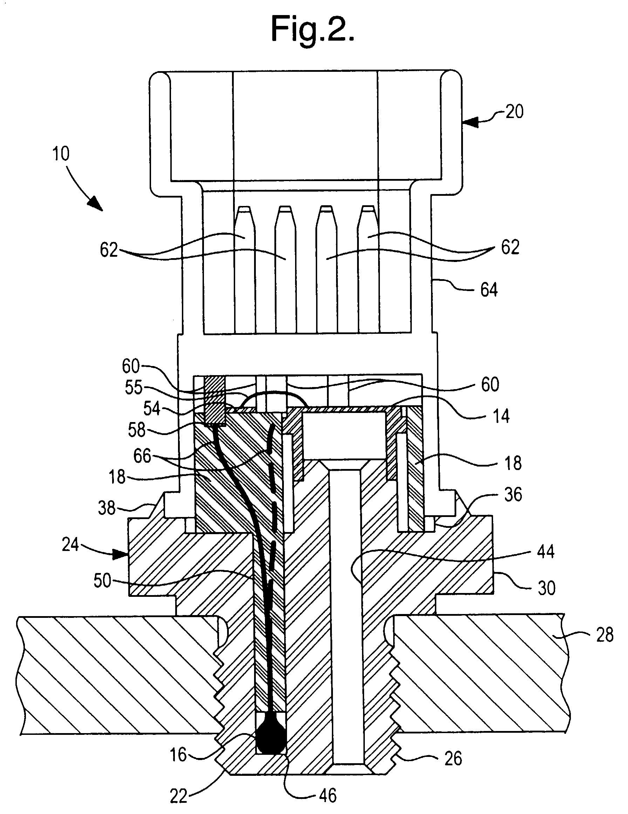

Referring to Figures 1A-1B and 2, the reference numeral 10 generally designates a sensor assembly for sensing the temperature and pressure of a pressurized fluid contained within a pressure vessel. The sensor assembly 10 comprises a stainless steel pressure port 12, a stainless steel pressure sensor 14, a temperature sensor 16, an inner housing 18, and a cover 20.

The pressure port 12 has a stud portion 22 at one axial end and a cup portion 24 at the other axial end. The stud portion 22 is provided with external threads 26 for attachment of the assembly 10 to the wall 28 of a pressure vessel. For example, the wall 28 may a portion of a housing for a brake master cylinder, engine crankcase, etc. The cup portion 24 has a hex-shaped periphery 30 adapted to be engaged by a tool during installation and/or removal of the assembly 10, an end face 32, a pedestal 34, an annular shoulder 36 and circular lip 38. The pedestal 34 extends axially out of the end face 32, and is undercut as indicated by the reference numeral 40 to locate the pressure sensor 14. The inner housing 18 rests on the end face 32, and is radially located thereon by the annular shoulder 36, which also extends axially out of end face 32. The cover 20, in turn, rests on shoulder 36, and is held in place by an adhesive and/or by radially inward deformation of the circular lip 38.

The pressure port 12 also includes open and closed axial bores 44 and 46 for respectively accommodating the pressure sensor 14 and the temperature sensor 16. The open bore 44 is centered in the pedestal 34 and extends though both the pedestal and the stud portion 22, placing the pressure sensor 14 in contact with the pressurized fluid contained by vessel wall 28. The sensor element 14 is welded onto the pedestal 34 by a laser or electron beam, providing a hermetic seal, and preventing leakage of the fluid into the sensor assembly 10. The closed bore 46 is laterally offset from the pedestal 34 and extends from the end face 32 deep into the stud portion 22 for receiving the temperature sensor 16 and thereby placing the temperature sensor 16 in virtual thermal contact with the pressurized fluid.

The inner housing 18 is a molded plastic part, comprising a cylindrical base portion 48 and an integral tube portion 50 extending therefrom in axial alignment with the second bore 46. The outside diameter of base portion 48 corresponds with the inside diameter of the pressure port shoulder 36, enabling the shoulder 36 to radially locate inner housing 18, as mentioned above. The housing 18 also has a cylindrical opening 52 that accommodates the pressure sensor 14 and pressure port pedestal 34. A set of metal contacts 54 are formed on the outboard face of housing 18 adjacent the cylindrical opening 52 for attachment with corresponding contacts 56 formed on the outboard surface of pressure sensor 14, by wire bonds 55, for example. Additionally, the housing 18 includes a set of peripherally disposed contacts 58 which are engaged by corresponding terminal blades 60 disposed within the cover 20. The terminal blades 60, in turn, are coupled to a corresponding set of terminal blades 62 within a connector portion 64 of the cover 20 for attachment to a suitable female connector, not shown.

Preferably, the cover 20 and inner housing 18 are insert molded parts. In the case of cover 20, the terminal blades 60 and 62 and metal leads (not shown) interconnecting the respective terminal blades 60,62 are formed as one or more lead-frames that are positioned in a mold used to form the cover 20, and the plastic material subsequently injected into the mold hardens around predefined portions of the lead-frame elements, covering all but the exposed portions of terminal blades 60, 62. The inner housing 18 is formed in a similar manner, with the temperature sensor 16, its lead-in wires 66, and metal contacts 54, 58 being positioned in a mold prior to injection of plastic material, the lead-in wires 66 being electrically coupled to a pair of contacts 58, and the sensor 16 and the contacts 54, 58 remaining exposed after the injected plastic has hardened.

As indicated, electrical connections between terminal blades 62 and the sensors 14, 16, are provided by the terminals 60 and 58, the connections between lead-in wires 66 and the contacts 58, internal connections between the contacts 54 and respective contacts 58, and wire-bond connections between respective contacts 56 and 54. Such electrical connections include power (+5 VDC, for example), ground and signals (temperature and pressure).

The sensor assembly steps, best illustrated in Figures 1A-1B, include positioning the pressure sensor 14 on pedestal 34 with the contacts 56 oriented substantially as shown to minimize wire-bond length, welding the sensor 14 to the pedestal 34 to form a hermetic and leak-proof seal therebetween, securing (with a suitable adhesive) the inner housing 18 on the end face 32 so that the tube portion 50 extends into the closed bore 46, wire-bonding the respective contacts 54, 56, securing (with a suitable adhesive) the cover 20 on the shoulder 36 so that the terminals 60 contact the terminals 58. Depending on material selection, the cover 20 may be alternatively or additionally secured in place through radially inward deformation of the circular lip 38, as mentioned above. Thus assembled, the pressure sensor 14 is placed in direct but leak-proof contact with the pressurized fluid, and the temperature sensor 16 is placed in virtual and leak-proof thermal contact with the pressurized fluid. Experimental testing has confirmed that the sensor 16 as mounted in the described assembly provides a temperature reading that conforms very closely to that of a temperature sensor in direct contact with the pressurized fluid. Best results were obtained when thermally conductive grease was applied to the sensor 16 or bore 46 prior to insertion of the tube 50 into bore 46.

In summary, the assembly of the present invention provides an improved integrated pressure and temperature sensor for a pressurized fluid. Integration reduces the overall cost of the sensor, the pressurized fluid cannot lead into or out of the sensor assembly, and the measuring performance of the temperature sensor closely tracks that of a sensor in direct contact with the pressurized fluid. While the invention has been described in reference to the illustrated embodiment, it will be understood that various modifications will occur to those skilled in the art, and that sensor assemblies incorporating such modifications may fall within the scope of this invention, which is defined by the appended claims.

## Claims

1. An integrated pressure and temperature sensor assembly (10) comprising:
a pressure port (12) having a stud portion (22) at a first axial end, the stud portion (22) adapted to be secured to a pressure vessel wall (28) for contacting a pressurized fluid, an end face (32) at a second axial end, a first axial bore (44) opening into said end face (32) and extending completely through said stud portion (22), and a second axial bore (46) opening into said end face (32) and extending partially through said stud portion (22);
a stainless steel pressure sensor element (14) welded to the second axial end of said pressure port (12) about said first axial bore (44), thereby placing said pressure sensor element (14) in direct contact with said pressurized fluid via said first axial bore (44); and
a temperature sensor element (16) disposed in said second axial bore (46), thereby placing said temperature sensor element (16) in indirect thermal contact with said pressurized fluid via an inboard end of said stud portion (22).

2. The sensor assembly of Claim 1, wherein the pressure port (12) includes a pedestal (34) extending out of said end face (32), said first axial bore (44) extends axially through said pedestal (34), and the pressure sensor element (14) is disposed on and welded to said pedestal (34).

3. The sensor assembly of Claim 1, wherein the first and second axial bores (44, 46) are each radially offset from a central axis of said pressure port (12).

4. An integrated pressure and temperature sensor assembly (10) comprising:
a pressure port (12) having a stud portion (22) at a first axial end, the stud portion (22) adapted to be secured to a pressure vessel wall (28) for contacting a pressurized fluid, an end face (32) at a second axial end, a first axial bore (44) opening into said end face (32) and extending completely through said stud portion (22), and a second axial bore (46) opening into said end face (32) and extending partially through said stud portion (22);
a stainless steel pressure sensor element (14) welded to the second axial end of said pressure port (12) about said first axial bore (44), thereby placing said pressure sensor element (14) in direct contact with said pressurized fluid via said first axial bore (44);
an inner housing (18) secured to said end face (32), and having a tube portion (50) extending into said second axial bore (46); and
a temperature sensor element (16) disposed in said second axial bore (46) and extending from an inboard end of said tube portion (50), thereby placing said temperature sensor element (16) in indirect thermal contact with said pressurized fluid via an inboard end of said stud portion (22).

5. The sensor assembly of Claim 4, wherein the inner housing (18) is a molded plastic part, and a lead-in wire (66) of said temperature sensor element (16) is insert molded into the inner housing (18).

6. The sensor assembly of Claim 4, including a contact (58) insert molded into the inner housing (18), and a lead-in wire (66) insert molded into the inner housing (18) and electrically coupling the temperature sensor element (16) to the contact (58).

7. The sensor assembly of Claim 4, wherein:
said pressure port (12) includes a pedestal (34) extending out of said end face (32), said first axial bore (44) extends through said pedestal (34), and the pressure sensor element (14) is disposed on and welded to said pedestal (34); and
said inner housing (18) includes an opening (52) that accommodates said pressure sensor element (14) and pedestal (34), so as to position an outboard face of said pressure sensor (14) in axial proximity to an outboard face of said inner housing (18).

8. The sensor assembly of Claim 7, including a first set of contacts (54) on the outboard face of the inner housing (18), a second set of contacts (56) on the outboard face of said pressure sensor element (14), and wire-bond connections (55) between the first and second sets of contacts (54, 56).

9. The sensor assembly of Claim 4, including a cover (20) attached to said pressure port (12) and surrounding said inner housing (18), the cover (20) having a set of terminal blades (60) that contact a corresponding set of terminals (58) on an outboard face of said inner housing (18).

10. The sensor assembly of Claim 9, wherein the pressure port (12) includes a peripheral annular shoulder (36) extending axially from said end face (32), said inner housing (18) is disposed on said end face (32) within an inside diameter of said peripheral shoulder (36), and said cover (20) is disposed on said peripheral shoulder (36).
